# EUROPÄISCHE PATENTANMELDUNG

(11) **EP 4 344 767 A1**
(43) Veröffentlichungstag der Anmeldung: **03.04.2024**
(21) Anmeldenummer: 22198215.0
(22) Anmeldetag: 27.09.2022
(51) Int. Cl.: B01F 23/451, B01F 25/312, B01F 35/221, B01F 35/71, F16K 1/52, F16K 31/385, F16K 31/524, F16K 31/56

(54) **MISCHVORRICHTUNG ZUM MISCHEN VON CHEMIKALIEN MIT TRINKWASSER, SYSTEM ZUM MISCHEN VON CHEMIKALIEN MIT TRINKWASSER SOWIE VERWENDUNG EINER MISCHVORRICHTUNG**

(71) Anmelder: PSG Germany GmbH, 47228 Duisburg (DE)
(72) Erfinder: KALKKUHL, Tobias, 45470 Mülheim (DE)
(74) Vertreter: König Szynka Tilmann von Renesse Patentanwälte Partnerschaft mbB Düsseldorf

(57) **Zusammenfassung**

Die Erfindung betrifft eine Mischvorrichtung (2) zum Mischen von Chemikalien mit Trinkwasser, mit einem Verbindungselement (4) umfassend mindestens einen Einlass (6) zum Anschließen an ein Trinkwassersystem, eine Öffnung (8) zur Aufnahme eines Ventils (12) und einen Auslass (10), wobei der Einlass (6), die Öffnung (8) und der Auslass (10) fluidisch verbunden sind, mit einem Ventil (12), wobei das Ventil (12) in der Öffnung (8) des Verbindungselements (4) angeordnet ist, wobei mit dem Ventil (12) der Durchfluss vom Einlass (6) zum Auslass (10) steuerbar ist, mit einem Mischelement (14), wobei das Mischelement (14) und der Auslass (10) fluidisch verbunden sind, wobei das Mischelement (14) zum Mischen von Chemikalien mit Trinkwasser ausgebildet ist, wobei das Ventil (12) zum Steuern des Durchflusses mindestens eine bistabile Mechanik (16) aufweist. Zudem betrifft die Erfindung ein System zum Mischen von Chemikalien mit Trinkwasser wobei das System mindestens zwei erfindungsgemäße Mischvorrichtung (2) umfasst sowie die Verwendung einer erfindungsgemäßen Mischvorrichtung.

## Beschreibung

Die Erfindung betrifft eine Mischvorrichtung zum Mischen von, insbesondere flüssigen, Chemikalien mit Trinkwasser, ein System umfassend mindestens zwei Mischvorrichtung und eine Verwendung einer Mischvorrichtung.

Mischvorrichtung zum Mischen von, insbesondere flüssigen, Chemikalien mit Trinkwasser werden beispielsweise zum Mischen von Reinigungsmitteln, Spülmitteln und Desinfektionsmitteln, insbesondere für Großküchen, Industriebetriebe, landwirtschaftliche Betriebe und Betriebe des Nahrungsmittelgewerbes eingesetzt. Eine andere beispielhafte Einsatzmöglichkeit sind das Mischen von Bearbeitungszusätzen, Bohrmitteln und Schneidemitteln.

Die Mischvorrichtung weist ein Verbindungselement auf, das mindestens einen Einlass zum Anschließen an ein Trinkwassersystem, eine Öffnung zur Aufnahme eines Ventils und einen Auslass umfasst. Der Einlass, die Öffnung und der Auslass sind fluidisch verbunden. Das Ventil ist in der Öffnung des Verbindungselements angeordnet, wobei mit dem Ventil der Durchfluss vom Einlass zum Auslass steuerbar ist. Zudem umfasst die Mischvorrichtung ein Mischelement, das fluidisch mit dem Auslass verbunden ist. Das Mischelement ist zum Mischen von Chemikalien mit Trinkwasser ausgebildet.

Zum Mischen von Chemikalien mit Trinkwassern muss der Durchfluss des Trinkwassers gesteuert werden. Sobald Trinkwasser durch die Mischvorrichtung läuft, wird das Trinkwasser an dem Mischelement mit Chemikalien gemischt. Die Mischung aus Chemikalien und Trinkwasser kann anschließend verwendet werden.

Hierbei ist vor allem die Steuerung des Durchflusses bei bekannten Mischvorrichtungen problematisch. Als Ventil werden beispielsweise Magnetventile eingesetzt. Bei Magnetventilen muss die bedienende Person einen Magneten betätigen, um das Ventil zu öffnen. Folglich muss das Magnetventil während des Mischens die ganze Zeit gedrückt werden.

Alternativ sind Rastmechanismen bekannt, mit denen der Magnet gehalten wird, um das Ventil in der Offenstellung zu halten. Dabei verklemmt der Magnet häufig an dem Rastmechanismus, sodass das Ventil nicht wieder verschlossen werden kann. Hierdurch werden Trinkwasser und Chemikalien verschwendet.

Ferner benötigen Magnetventile magnetisches Material und Permanentmagneten. Diese sind in der Herstellung energie- und kostenaufwendig. Zudem weisen Magnetventile im Innern häufig schlecht durchspülte Hohlräume auf, die die Wasserqualität negativ beeinflussen können. Ferner werden für Magnetventile verschiedenen Materialien benötigt wie beispielsweise Stahl, Elastomere und Kunststoffe. Hierbei kann die Trinkwassereignung der einzelnen Materialien nicht immer sichergestellt werden.

Außerdem sind Magnetventile sehr groß, da ein großer Magnet benötigt wird, um ein ausreichend starkes magnetisches Feld zu haben. Dadurch sind zum Betätigen des Magnetventils große Kräfte notwendig. Aufgrund der großen Kräfte muss das Magnetventil robust gestaltet werden und somit muss viel Material verwendet werden.

Weiterhin verschließen Magnetventile ruckartig das Ventil. Hierdurch wird das Ventil abrupt geschlossen und der Durchfluss ebenfalls abrupt unterbrochen. Dabei entsteht ein Druckanstieg in dem Rohrsystem des Trinkwassers. Dieser Druckanstieg kann das empfindliche Rohrsystem des Trinkwassers schädigen.

Ausgehend von diesem Stand der Technik liegt der vorliegenden Erfindung die Aufgabe zu Grunde eine Mischvorrichtung vorzuschlagen, die zuverlässig, einfach bedienbar, energiesparend und kostensparend ist, wobei gleichzeitig eine Schädigung des Rohrsystem des Trinkwassers durch die Mischvorrichtung verhindert wird.

Erfindungsgemäß wird diese Aufgabe gemäß einem ersten Aspekt der Erfindung durch eine Mischvorrichtung zum Mischen von, insbesondere flüssigen, Chemikalien mit Trinkwasser gelöst, mit einem Verbindungselement umfassend mindestens einen Einlass zum Anschließen an ein Trinkwassersystem, eine Öffnung zur Aufnahme eines Ventils und einen Auslass, wobei der Einlass, die Öffnung und der Auslass fluidisch verbunden sind, mit einem Ventil, wobei das Ventil in der Öffnung des Verbindungselements angeordnet ist, wobei mit dem Ventil der Durchfluss vom Einlass zum Auslass steuerbar ist, mit einem Mischelement, insbesondere einer Venturi-Düse, wobei das Mischelement und der Auslass fluidisch verbunden sind, wobei das Mischelement zum Mischen von Chemikalien mit Trinkwasser ausgebildet ist, wobei das Ventil zum Steuern des Durchflusses mindestens eine bistabile Mechanik aufweist.

Chemikalien können beispielsweise Reinigungsmittel, Schmiermittel, Desinfektionsmittel oder Kühlmittel sein, die für Ihre Verwendung mit Trinkwasser verdünnt werden können. Die Chemikalien können dem Trinkwasser als Flüssigkeit oder als Feststoff beigefügt werden.

Fluidisch verbunden kann bedeuten, dass Trinkwasser zwischen beispielweise zwei fluidisch verbundenen Elementen fließen kann. Beispielweise kann das Trinkwasser vom Einlass zum Auslass, zur Öffnung und/oder zum Mischelement fließen.

Mischen von Chemikalien mit Trinkwasser kann die Herstellung einer Lösung, einer Emulsion, einer Dispersion und/oder einer Suspension bedeuten. Demnach können die Chemikalien und das Trinkwasser ineinander gelöst sein oder als fein verteiltes Gemisch vorliegen. Dabei können die Chemikalien ebenfalls als Festkörper in dem Trinkwasser vorliegen.

Eine mindestens bistabile Mechanik kann eine Mechanik mit mindestens zwei energetisch stabilen Zuständen sein, wobei die Änderung von einem Zustand in einen anderen Zustand nur durch Aufwendung von Energie möglich sein können.

Das Mischelement ist zum Mischen von Chemikalien mit Trinkwasser geeignet. Dabei kann als Mischelement jede Vorrichtung zum Mischen vorgesehen sein.

Das Wort "angeordnet" kann bedeuten, dass die beiden Teile, die aneinander angeordnet sind, miteinander fest verbunden sein können. Beispielweise können die beiden Teile miteinander verklebt, verschweißt, verschraubt oder ähnliches sein.

Es hat sich herausgestellt, dass die erfindungsgemäße Mischvorrichtung besonders zuverlässig und einfach bedienbar ist. Zudem kann die Mischvorrichtung energie- und kostensparsam hergestellt werden. Zudem kann durch das Steuern des Durchflusses mit der mindestens einen bistabilen Mechanik der Durchfluss nicht abrupt geändert werden. Hierdurch kann ein Druckanstieg und damit eine Schädigung des Rohrsystems des Trinkwassers durch die Mischvorrichtung verhindert werden.

Wenn das Ventil zum Steuern des Durchflusses mehr als eine bistabile Mechanik aufweist und die Mechanik somit mehr als zwei stabile Zustände haben kann, kann der Durchfluss besonders gut gesteuert werden.

Eine bistabile Mechanik mit nur zwei stabilen Zuständen kann besonders einfach zu bedienen sein und besonders kostengünstig in der Herstellung sein.

Wenn das Mischelement eine Venturi-Düse ist, können Chemikalien besonders einfach und effizient mit dem Trinkwasser gemischt werden. Eine Venturi-Düse kann keine zusätzliche Energie zum Mischen benötigen, sodass eine Mischvorrichtung mit einer Venturi-Düse besonders energiesparend ist.

Nach einer ersten Ausgestaltung kann die Mischvorrichtung ferner ein Sicherungsmittel und ein Abstandsmittel umfassen, wobei der Auslass und das Mischelement über das Sicherungsmittel und das Abstandsmittel fluidisch verbunden sein können, wobei das Sicherungsmittel räumlich näher an dem Auslass angeordnet sein kann als das Abstandsmittel, wobei das Sicherungsmittel zum Unterbinden eines Rückflusses zum Auslass des Verbindungselements ausgebildet sein kann.

Das Sicherungsmittel kann eine Sicherungseinrichtung nach DIN EN 1717 sein. Das Sicherungsmittel kann dazu dienen, dass kein Trinkwasser zum Auslass des Verbindungselements zurückfließt. Hierbei kann das Sicherungsmittel auf einfache Weise verhindern, dass Chemikalien vom Mischelement in das Trinkwassersystem gelangen.

Ein Sicherungsmittel kann insbesondere ein Typ DB Rohrunterbrecher nach der DIN EN 1717 sein.

Ein Typ DB Rohrunterbrecher kann ein Rohrunterbrecher mit elastischen Membranen mit Belüftungsöffnungen sein, die bei atmosphärischem oder höherem Innendruck und Wasserdurchfluss geschlossen sein können, die jedoch bei einem geringeren als atmosphärischem Druck oder bei keinem Durchfluss Luftzutritt ermöglichen können und bei normalen Druckbedingungen wieder wasserdicht schließen können. Die Armatur kann den Schutz vor Rücksaugen nur durch die Belüftung von der Atmosphäre her bieten, nicht jedoch gegen Rückdrücken. Die Fließrichtung kann senkrecht nach unten sein.

Das Abstandsmittel kann zwischen dem Sicherungsmittel und dem Mischelement angeordnet sein. Das Abstandsmittel kann sicherstellen, dass bei einem Rückfluss von Trinkwasser mit Chemikalien vom Mischelement zum Sicherungsmittel, zunächst noch sauberes Trinkwasser aus dem Abstandsmittel zum Sicherungsmittel zurückläuft.

Mit der ersten Ausgestaltung der Mischvorrichtung kann die Sicherheit der Mischvorrichtung erhöht werden und somit kann die Mischvorrichtung besonders zuverlässig sein, da ein Rückfluss von Chemikalien in das Trinkwassersystem unterbunden werden kann.

Nach einer weiteren Ausgestaltung kann das Abstandsmittel eine Länge von mindestens 100 mm, bevorzugt von 150 mm und besonders bevorzugt von 200 mm aufweisen.

Bei einer Länge von 100 mm kann der Rückfluss von Trinkwasser mit Chemikalien vom Mischelement zum Sicherungsmittel besonders gut verhindert werden. Ab einer Länge von 150 mm kann das Abstandmittel die Voraussetzungen der DIN EN 1717 erfüllen. Bei dem Abstandmittel kann es sich um einen Rohrunterbrecher der Familie D, Typ B handeln. Ab einer Länge von 200 mm kann der Rückfluss von Chemikalien besonders zuverlässig verhindert werden.

Nach einer weiteren Ausgestaltung kann die mindestens bistabile Mechanik ein Bedienelement, bevorzugt einen Druckknopf, umfassen, wobei die Zustände der mindestens bistabilen Mechanik durch eine Betätigung des Bedienelements einstellbar sein können.

Ein Bedienelement kann den Vorteil haben, dass auf besonders einfache und zuverlässige Weise die Mischvorrichtung genutzt werden kann. Mit einem Druckknopf kann die Mischvorrichtung ganz besonders einfach und zuverlässig bedient werden, da zum Betätigen der Mischvorrichtung nur eine axiale Bewegung nötig sein kann. Zudem kann ein Druckknopf besonders kostengünstig hergestellt werden. Ferner kann ein Druckknopf aufgrund des einfachen Aufbaus besonders zuverlässig sein.

Vorteilhafterweise kann das Bedienelement von außen zugänglich für den manuellen Betrieb durch einen Nutzer sein.

Nach einer weiteren Ausgestaltung kann die mindestens bistabile Mechanik ferner ein Führungsteil und ein Verstellteil umfassen, wobei das Verstellteil durch das Bedienelement entlang einer Achse verschiebbar sein kann, wobei das Verstellteil in unterschiedlichen Positionen entlang der Achse mit dem Führungsteil fixierbar sein kann, wobei die unterschiedlichen Positionen durch eine Rotation des Verstellteils um die Achse beim Verschieben entlang der Achse auswählbar sein können, wobei die unterschiedlichen Positionen den unterschiedlichen Zuständen der mindestens bistabilen Mechanik entsprechen können.

Eine solche bistabile Mechanik kann ein Bedienelement, ein Verstellteil und ein Führungsteil umfassen. Dabei kann das Verstellteil an dem Bedienelement angeordnet sein. Das Verstellteil kann auf der Außenfläche mindestens einen vertikalen Vorsprung aufweisen, der auf der dem Bedienelement zugewandten Seite eine Schrägfläche aufweisen kann. Das Bedienelement kann auf der Außenfläche mindestens eine Erhebung aufweisen, die an der dem Verstellteil zugewandten Seite keilförmig ausgebildet sein kann. Das Bedienelement und das Verstellteil können in dem Führungsteil angeordnet sein. Ferner kann das Führungsteil auf der Innenfläche mindestens zwei Rillen aufweisen. Dabei können die mindestens zwei Rillen so ausgebildet sein, dass das Verstellteil mit dem mindestens einen Vorsprung in diesen Rillen in Richtung ihrer Längsachse in dem Führungsteil verschiebbar geführt sein kann. Die mindestens zwei Rillen können unterschiedliche Längen aufweisen.

Zur Betätigung des Ventils kann das Bedienelement entlang der Achse bewegt werden. Das Verstellteil kann dadurch mit dem mindestens einen Vorsprung aus den mindestens zwei Rillen ausfahren. Das Verstellteil kann sich mit dem mindestens einen Vorsprung an den Erhebungen des Bedienelements derart abstoßen, dass das Verstellteil um die Achse um einen Rillenabstand rotieren kann. Anschließend kann das Bedienelement wieder zurückfahren. Dabei kann der mindestens eine Vorsprung des Verstellteils in einer der mindestens zwei Rillen des Führungsteils entlangfahren. Da die mindestens zwei Rillen unterschiedliche Längen aufweisen können, kann das Verstellteil in unterschiedlichen Positionen entlang der Achse mit dem Führungsteil fixierbar sein.

Vorteilhafterweise kann das Ventil und damit auch die Mischvorrichtung auf diese Weise besonders einfach und zuverlässig geschaltet werden.

Nach einer weiteren Ausgestaltung kann das Ventil ein Hilfsventil und ein Hauptventil umfassen, wobei das Hilfsventil über die mindestens bistabile Mechanik steuerbar sein kann, wobei das Hauptventil eine Membran umfassen kann, die zum Steuern des Durchflusses verstellbar sein kann, wobei das Hilfsventil zum Verstellen der Membran ausgebildet sein kann, wobei insbesondere das Hilfsventil mit dem Verstellteil mechanisch miteinander verbunden sein kann.

Das Hauptventil kann den Durchfluss des Ventils über die Membran steuern. Dazu kann die Position der Membran verändert werden. Die Membran kann zum Unterbinden des Durchflusses des Trinkwassers ausgebildet sein. Dabei kann die Membran aus wasserdichtem Material sein.

Das Hilfsventil kann zum Verstellen der Membran ausgebildet sein. Dabei kann über das Hilfsventil die Membran verstellt werden. Da die Membran zum Steuern des Durchflusses verstellbar sein kann, kann der Durchfluss über das Hilfsventil gesteuert werden. Das Verstellen der Membran kann über eine axiale, rotatorische und/oder schwenkende Bewegung der Membran erfolgen. Über die Bewegung der Membran kann der Durchfluss des Trinkwassers gesteuert werden.

Es hat sich herausgestellt, dass auf diese Weise der Durchfluss besonders einfach gesteuert werden kann, da weniger Kraft zum Steuern des Ventils benötigt werden kann.

Wenn das Hilfsventil mit dem Verstellteil mechanisch miteinander verbunden sein kann, kann das Hilfsventil besonders einfach bedient werden. Zudem kann eine mechanische Verbindung besonders stabil sein, sodass das Ventil besonders zuverlässig sein kann.

Nach einer weiteren Ausgestaltung kann das Ventil eine Druckkammer, einen Membransitz und eine Entlastungsöffnung umfassen, wobei über den Abstand zwischen der Membran und dem Membransitz der Durchfluss steuerbar sein kann, wobei die Druckkammer zum Aufbau von Druck auf die Membran ausgebildet sein kann, wobei über den Druck der Druckkammer auf die Membran der Abstand zwischen der Membran und dem Membransitz regulierbar sein kann, wobei die Entlastungsöffnung zur Druckentlastung der Druckkammer ausgebildet sein kann, wobei die Druckentlastung über die Entlastungsöffnung mit dem Hilfsventils steuerbar sein kann.

Der Membransitz kann das Gegenstück zur Membran sein. Dabei kann der Membransitz aus wasserdichtem Material bestehen. Der Abstand zwischen dem Membransitz und der Membran kann der Durchlass für das Trinkwasser sein, worüber der Durchfluss des Trinkwassers gesteuert werden kann. Beim Verschließen des Ventils kann der Membransitz und die Membran gegeneinandergedrückt sein.

Die Druckkammer kann ein Raum sein, in dem Druck aufgebaut werden kann. Der Druck kann durch den Leitungsdruck des Trinkwassers aufgebaut sein. Hierzu kann die Druckkammer mit dem mindestens einen Einlass des Verbindungselements fluidisch verbunden sein. Die Druckkammer kann Druck auf die Membran ausüben. Hierbei kann die Membran in Richtung des Membransitzes oder sogar auf den Membransitz gedrückt werden. Auf diese Weise kann der Abstand zwischen der Membran und dem Membransitz regulierbar sein.

Die Druckkammer, die Membran und der Membransitz können entlang einer Achse angeordnet sein. Somit kann der Druck der Druckkammer geradlinig auf die Membran aufgebracht werden.

Die Entlastungsöffnung kann zur Druckentlastung der Druckkammer ausgebildet sein. Dazu kann die Entlastungsöffnung mit dem mindestens einen Auslass des Verbindungselements fluidisch verbunden sein. Mit dem Hilfsventil kann die Entlastungsöffnung geschlossen, teilweise geöffnet und/oder geöffnet werden. Hierdurch kann der Druck aus der Druckkammer nicht, teilweise oder ganz entweichen. Auf diese Weise kann der Druck auf die Membran eingestellt werden, sodass der Durchfluss reguliert werden kann.

Vorteilhafterweise kann eine Mischvorrichtung mit einem solchen Ventil besonders zuverlässig und sicher sein.

Nach einer weiteren Ausgestaltung kann das Ventil in der Öffnung mit einem Klemmelement befestigt sein, wobei das Klemmelement zum Entnehmen des Ventils lösbar sein kann.

Ein Klemmelement kann jedes Element sein, dass durch eine Spannung das Ventil in der Öffnung fixieren kann. Zum Lösen des Ventils kann die Spannung des Klemmelements reduziert werden.

Durch das Klemmelement kann das Ventil besonders einfach zur Reinigung der Mischvorrichtung entnommen werden. Dadurch wird die Reinigung erleichtert, sodass die Bedienung der Mischvorrichtung erleichtert werden kann.

Nach einer weiteren Ausgestaltung kann das Klemmelement mindestens zwei Schenkel und ein Mittelstück aufweisen, wobei die mindestens zwei Schenkel über das Mittelstück miteinander verbunden sein können.

Ein solches Klemmelement kann besonders einfach zu bedienen und kostengünstig herzustellen sein.

Nach einer weiteren Ausgestaltung kann das Verbindungselement an der Öffnung mindestens zwei Aufnahmen für die Aufnahme des Klemmelements, insbesondere der Schenkel des Klemmelements, aufweisen.

Auf diese Weise kann das Klemmelement besonders sicher und einfach an dem Verbindungselement befestigt werden. Somit kann eine solche Mischvorrichtung besonders zuverlässig und sicher sein.

Nach einer weiteren Ausgestaltung kann die Mischvorrichtung ein Sieb zum Filtern des Trinkwassers umfassen, wobei insbesondere das Sieb in der Öffnung angeordnet ist.

Wenn das Wasser mit einem Sieb gefiltert werden kann, können Schäden an der Mischvorrichtung verhindert werden. Somit kann die Mischvorrichtung mit einem Sieb besonders zuverlässig sein.

Wenn das Sieb in der Öffnung angeordnet werden kann, kann das Wasser vor dem Ventil gefiltert werden. Hierdurch können Schäden an dem Ventil verhindert werden. Das Ventil kann dabei das empfindlichste Teil der Mischvorrichtung sein, sodass die Zuverlässigkeit erhöht wird.

Nach einer weiteren Ausgestaltung kann das Verbindungselement mindestens einen Anschluss zum Anschließen einer weiteren Mischvorrichtung aufweisen.

Auf diese Weise können an einen Trinkwasseranschluss mehrere Mischvorrichtungen angebracht werden, sodass keine weiteren Trinkwasseranschlüssen benötigt werden können. Daher kann die Installation von mehreren Mischvorrichtungen besonders kosten- und energiesparend sein.

Erfindungsgemäß wird diese Aufgabe gemäß einem zweiten Aspekt der Erfindung durch ein System zum Mischen von, insbesondere flüssigen, Chemikalien mit Trinkwasser gelöst, wobei das System mindestens zwei erfindungsgemäße Mischvorrichtung umfasst.

Mit dem System werden die zuvor genannten Vorteile erreicht. Zudem kann mit einem System mehreren Benutzern gleichzeitig die Entnahme von Trinkwasser mit Chemikalien ermöglicht werden. Ferner können auch mindestens zwei Mischvorrichtungen mit unterschiedlichen Chemikalien angebracht werden. Hierdurch wird die Benutzung erleichtert.

Erfindungsgemäß wird diese Aufgabe gemäß einem dritten Aspekt der Erfindung durch die Verwendung einer erfindungsgemäßen Mischvorrichtung oder eines erfindungsgemäßen Systems zum Mischen von Reinigungsmitteln, Spülmitteln und Desinfektionsmitteln, insbesondere für Großküchen, Industriebetriebe, landwirtschaftliche Betriebe und Betriebe des Nahrungsmittelgewerbes, oder zum Mischen von Bearbeitungszusätzen, Bohrmitteln und Schneidemitteln gelöst.

Mit der Verwendung der Mischvorrichtung werden die zuvor genannten Vorteile erreicht.

Nachfolgend wird die Erfindung anhand von Ausführungsbeispielen zeigenden Zeichnungen näher erläutert. Es zeigen jeweils schematisch:
- Fig. 1: eine schematische Darstellung eines erfindungsgemäßen Mischelements;
- Fig. 2: eine schematische Darstellung einer mindestens bistabilen Mechanik und eines Ventils; und
- Fig. 3: eine Explosionsansicht eines Verbindungselements mit einem Ventil und einem Klemmelement.

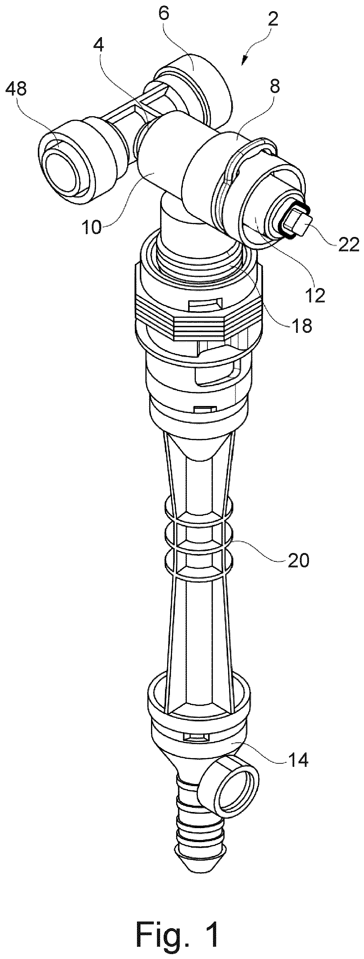

In Fig. 1 ist eine Mischvorrichtung 2 zum Mischen von, insbesondere flüssigen, Chemikalien mit Trinkwasser gezeigt. Die Mischvorrichtung hat ein Verbindungselement 4 umfassend mindestens einen Einlass 6 zum Anschließen an ein Trinkwassersystem, eine Öffnung 8 zur Aufnahme eines Ventils und einen Auslass 10. Der Einlass 6, die Öffnung 8 und der Auslass 10 sind fluidisch verbunden. Die Mischvorrichtung 2 hat ein Ventil 12, wobei das Ventil 12 in der Öffnung 8 des Verbindungselements 4 angeordnet ist. Mit dem Ventil 12 ist der Durchfluss vom Einlass 6 zum Auslass 10 steuerbar. Die Mischvorrichtung hat ein Mischelement 14. Das Mischelement 14 kann eine Venturi-Düse sein. Das Mischelement 14 und der Auslass 10 sind fluidisch verbunden. Das Mischelement 14 ist zum Mischen von Chemikalien mit Trinkwasser ausgebildet. Das Ventil 12 weist zum Steuern des Durchflusses mindestens eine bistabile Mechanik 16 auf.

Die Mischvorrichtung 2 in Fig. 1 umfasst ferner ein Sicherungsmittel 18 und ein Abstandsmittel 20, wobei der Auslass 10 und das Mischelement 14 über das Sicherungsmittel 18 und das Abstandsmittel 20 fluidisch verbunden sind.

Das Sicherungsmittel 18 ist räumlich näher an dem Auslass 10 angeordnet als das Abstandsmittel 20. Das Sicherungsmittel 18 ist zum Unterbinden eines Rückflusses zum Auslass 10 des Verbindungselements 4 ausgebildet.

Das Abstandsmittel 20 weist dabei eine Länge von mindestens 100 mm auf. Das Abstandmittel kann auch eine Länge von mindestens 150 mm oder von mindestens 200 mm aufweisen.

Die mindestens bistabile Mechanik 16 umfasst ein Bedienelement 22. Das Bedienelement kann ein Druckknopf 22 sein. Die Zustände der mindestens bistabilen Mechanik 16 sind durch eine Betätigung des Bedienelements 22 einstellbar.

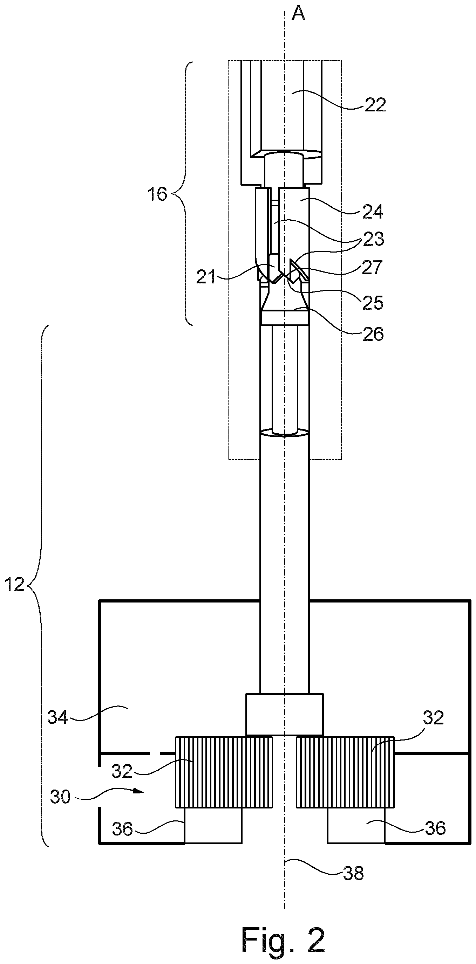

In Fig. 2 ist eine schematische Darstellung einer mindestens bistabilen Mechanik und eines Ventils gezeigt. Die mindestens bistabile Mechanik 16 umfasst ferner eine Führungsteil 24 und ein Verstellteil 26. Das Verstellteil 26 ist durch das Bedienelement 22 entlang einer Achse A verschiebbar. Das Verstellteil 26 ist in unterschiedlichen Positionen entlang der Achse A mit dem Führungsteil 24 fixierbar. Die unterschiedlichen Positionen sind durch eine Rotation des Verstellteils 26 um die Achse A beim Verschieben entlang der Achse A auswählbar. Die unterschiedlichen Positionen entsprechen den unterschiedlichen Zuständen der mindestens bistabilen Mechanik 16.

Das Verstellteil 26 ist an dem Bedienelement 22 angeordnet. Das Verstellteil 26 weist auf der Außenfläche vertikale Vorsprünge 25 auf, die auf der dem Bedienelement 22 zugewandten Seite eine Schrägfläche 27 aufweisen. Das Bedienelement 22 weist auf der Außenfläche Erhebungen 21 auf, die an der dem Verstellteil 26 zugewandten Seite keilförmig ausgebildet sind. Das Bedienelement 22 und das Verstellteil 26 sind in dem Führungsteil 24 angeordnet. Ferner weist das Führungsteil auf der Innenfläche Rillen 23 auf. Dabei sind die Rillen 23 so ausgebildet, dass das Verstellteil 26 mit den Vorsprüngen 25 in diesen Rillen 23 in Richtung der Achse A in dem Führungsteil 24 verschiebbar geführt ist. Die Rillen 23 weisen unterschiedliche Längen auf.

Zur Betätigung des Ventils 12 wird das Bedienelement 22 entlang der Achse A bewegt. Das Verstellteil 26 fährt dadurch mit den Vorsprünge 25 aus den Rillen 23 aus. Das Verstellteil 26 stößt sich mit den Vorsprüngen 25 an den Erhebungen 21 des Bedienelements 22 derart ab, dass das Verstellteil 26 um die Achse A um einen Rillenabstand rotiert. Anschließend fährt das Bedienelement 22 wieder zurück. Dabei fahren die Vorsprünge 25 des Verstellteils 26 in eine der Rillen 23 des Führungsteils 24 entlang. Da die Rillen 23 unterschiedliche Längen aufweisen, ist das Verstellteil 26 in unterschiedlichen Positionen entlang der Achse A mit dem Führungsteil 24 fixierbar.

Das Ventil 12 umfasst ein Hilfsventil 28 und ein Hauptventil 30,
wobei das Hilfsventil 28 über die mindestens bistabile Mechanik 16 steuerbar ist. Das Hauptventil 30 umfasst eine Membran 32, die zum Steuern des Durchflusses verstellbar ist. Das Hilfsventil 28 ist zum Verstellen der Membran 32 ausgebildet. Das Hilfsventil 28 ist mit dem Verstellteil 26 mechanisch verbunden.

Das Ventil 12 umfasst eine Druckkammer 34, einen Membransitz 36 und eine Entlastungsöffnung 38. Über den Abstand zwischen der Membran 32 und dem Membransitz 36 ist der Durchfluss steuerbar. Die Druckkammer 34 ist zum Aufbau von Druck auf die Membran 32 ausgebildet, wobei über den Druck der Druckkammer 34 auf die Membran 32 der Abstand zwischen der Membran 32 und dem Membransitz 36 regulierbar ist. Die Entlastungsöffnung 38 ist zur Druckentlastung der Druckkammer 34 ausgebildet, wobei die Druckentlastung über die Entlastungsöffnung 38 mit dem Hilfsventil 28 steuerbar ist.

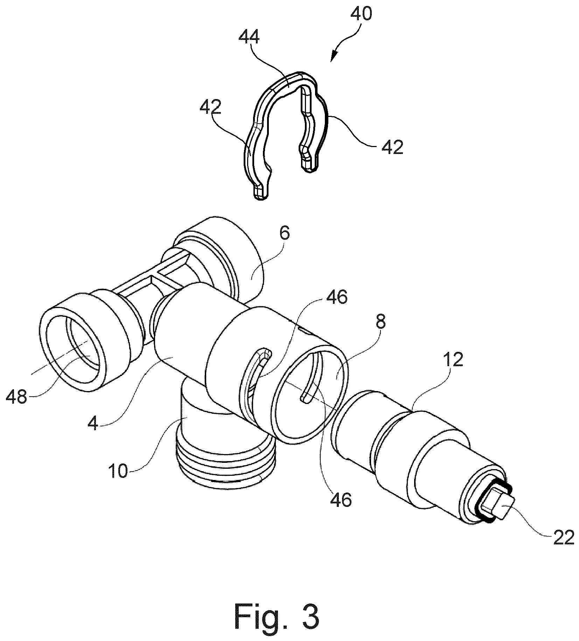

Fig. 3 zeigt eine Explosionsansicht eines Verbindungselements mit einem Ventil und einem Klemmelement. Das Ventil 12 ist in der Öffnung 8 mit einem Klemmelement 40 befestigt, wobei das Klemmelement 40 zum Entnehmen des Ventils 12 lösbar ist.

Das Klemmelement 40 weist mindestens zwei Schenkel 42 und ein Mittelstück 44 auf, wobei die mindestens zwei Schenkel 42 über das Mittelstück 44 miteinander verbunden sind.

Das Verbindungselement 4 weist an der Öffnung 8 mindestens zwei Aufnahmen 46 für die Aufnahme des Klemmelements 40, insbesondere der Schenkel 42 des Klemmelements 40, auf.

Die Mischvorrichtung 2 umfasst ein Sieb zum Filtern des Trinkwassers, wobei das Sieb in der Öffnung 8 angeordnet ist.

Das Verbindungselement 4 weist mindestens einen Anschluss 48 zum Anschließen einer weiteren Mischvorrichtung 2 auf.

Ein nicht dargestelltes System zum Mischen von, insbesondere flüssigen, Chemikalien mit Trinkwasser umfasst mindestens zwei Mischvorrichtung 2.

Eine Mischvorrichtung 2 oder ein System kann zum Mischen von Reinigungsmitteln, Spülmitteln und Desinfektionsmitteln, insbesondere für Großküchen, Industriebetriebe, landwirtschaftliche Betriebe und Betriebe des Nahrungsmittelgewerbes, oder zum Mischen von Bearbeitungszusätzen, Bohrmitteln und Schneidemitteln verwendet werden.

## Patentansprüche

1. Mischvorrichtung (2) zum Mischen von, insbesondere flüssigen, Chemikalien mit Trinkwasser,
mit einem Verbindungselement (4) umfassend mindestens einen Einlass (6) zum Anschließen an ein Trinkwassersystem, eine Öffnung (8) zur Aufnahme eines Ventils (12) und einen Auslass (10),
wobei der Einlass (6), die Öffnung (8) und der Auslass (10) fluidisch verbunden sind,
mit einem Ventil (12),
wobei das Ventil (12) in der Öffnung (8) des Verbindungselements (4) angeordnet ist,
wobei mit dem Ventil (12) der Durchfluss vom Einlass (6) zum Auslass (10) steuerbar ist,
mit einem Mischelement (14), insbesondere einer Venturi-Düse,
wobei das Mischelement (14) und der Auslass (10) fluidisch verbunden sind,
wobei das Mischelement (14) zum Mischen von Chemikalien mit Trinkwasser ausgebildet ist,
**dadurch gekennzeichnet, dass**
das Ventil (12) zum Steuern des Durchflusses mindestens eine bistabile Mechanik (16) aufweist.

2. Mischvorrichtung nach Anspruch 1,
**dadurch gekennzeichnet, dass**
die Mischvorrichtung (2) ferner ein Sicherungsmittel (18) und ein Abstandsmittel (20) umfasst,
wobei der Auslass (10) und das Mischelement (14) über das Sicherungsmittel (18) und das Abstandsmittel (20) fluidisch verbunden sind,
wobei das Sicherungsmittel (18) räumlich näher an dem Auslass (10) angeordnet ist als das Abstandsmittel (20),
wobei das Sicherungsmittel (18) zum Unterbinden eines Rückflusses zum Auslass (10) des Verbindungselements (4) ausgebildet ist.

3. Mischvorrichtung nach Anspruch 2,
**dadurch gekennzeichnet, dass**
das Abstandsmittel (20) eine Länge von mindestens 100 mm, bevorzugt von 150 mm und besonders bevorzugt von 200 mm aufweist.

4. Mischvorrichtung nach einem der Ansprüche 1 bis 3,
**dadurch gekennzeichnet, dass**
die mindestens bistabile Mechanik (16) ein Bedienelement (22), bevorzugt einen Druckknopf (22), umfasst,
wobei die Zustände der mindestens bistabilen Mechanik (16) durch eine Betätigung des Bedienelements (22) einstellbar sind.

5. Mischvorrichtung nach Anspruch 4,
**dadurch gekennzeichnet, dass**
die mindestens bistabile Mechanik (16) ferner ein Führungsteil (24) und ein Verstellteil (26) umfasst,
wobei das Verstellteil (26) durch das Bedienelement (22) entlang einer Achse (A) verschiebbar ist,
wobei das Verstellteil (26) in unterschiedlichen Positionen entlang der Achse (A) mit dem Führungsteil (24) fixierbar ist,
wobei die unterschiedlichen Positionen durch eine Rotation des Verstellteils (26) um die Achse (A) beim Verschieben entlang der Achse (A) auswählbar sind,
wobei die unterschiedlichen Positionen den unterschiedlichen Zuständen der mindestens bistabilen Mechanik (16) entsprechen.

6. Mischvorrichtung nach einem der Ansprüche 1 bis 5,
**dadurch gekennzeichnet, dass**
das Ventil (12) ein Hilfsventil (28) und ein Hauptventil (30) umfasst,
wobei das Hilfsventil (28) über die mindestens bistabile Mechanik (16) steuerbar ist,
wobei das Hauptventil (30) eine Membran (32) umfasst, die zum Steuern des Durchflusses verstellbar ist,
wobei das Hilfsventil (28) zum Verstellen der Membran (32) ausgebildet ist,
wobei insbesondere das Hilfsventil (28) mit dem Verstellteil (26) mechanisch verbunden ist.

7. Mischvorrichtung nach Anspruch 6,
**dadurch gekennzeichnet, dass**
das Ventil (12) eine Druckkammer (34), einen Membransitz (36) und eine Entlastungsöffnung (38) umfasst,
wobei über den Abstand zwischen der Membran (32) und dem Membransitz (36) der Durchfluss steuerbar ist,
wobei die Druckkammer (34) zum Aufbau von Druck auf die Membran (32) ausgebildet ist, wobei über den Druck der Druckkammer (34) auf die Membran (32) der Abstand zwischen der Membran (32) und dem Membransitz (36) regulierbar ist,
wobei die Entlastungsöffnung (38) zur Druckentlastung der Druckkammer (34) ausgebildet ist,
wobei die Druckentlastung über die Entlastungsöffnung (38) mit dem Hilfsventil (28) steuerbar ist.

8. Mischvorrichtung nach einem der Ansprüche 1 bis 7,
**dadurch gekennzeichnet, dass**
das Ventil (12) in der Öffnung (8) mit einem Klemmelement (40) befestigt ist, wobei das Klemmelement (40) zum Entnehmen des Ventils (12) lösbar ist.

9. Mischvorrichtung nach Anspruch 8,
**dadurch gekennzeichnet, dass**
das Klemmelement (40) mindestens zwei Schenkel (42) und ein Mittelstück (44) aufweist,
wobei die mindestens zwei Schenkel (42) über das Mittelstück (44) miteinander verbunden sind.

10. Mischvorrichtung nach einem der Ansprüche 8 oder 9,
**dadurch gekennzeichnet, dass**
das Verbindungselement (4) an der Öffnung (8) mindestens zwei Aufnahmen (46) für die Aufnahme des Klemmelements (40), insbesondere der Schenkel (42) des Klemmelements (40), aufweist.

11. Mischvorrichtung nach einem der Ansprüche 1 bis 10,
**dadurch gekennzeichnet, dass**
die Mischvorrichtung (2) ein Sieb zum Filtern des Trinkwassers umfasst,
wobei insbesondere das Sieb in der Öffnung (8) angeordnet ist.

12. Mischvorrichtung nach einem der Ansprüche 1 bis 11,
**dadurch gekennzeichnet, dass**
das Verbindungselement (4) mindestens einen Anschluss (48) zum Anschließen einer weiteren Mischvorrichtung (2) aufweist.

13. System zum Mischen von, insbesondere flüssigen, Chemikalien mit Trinkwasser
**dadurch gekennzeichnet, dass**
das System mindestens zwei Mischvorrichtung (2) nach einem der Ansprüche 1 bis 12 umfasst.

14. Verwendung einer Mischvorrichtung (2) nach einem der Ansprüche 1 bis 12 oder eines System nach Anspruch 13 zum Mischen von Reinigungsmitteln, Spülmitteln und Desinfektionsmitteln, insbesondere für Großküchen, Industriebetriebe, landwirtschaftliche Betriebe und Betriebe des Nahrungsmittelgewerbes, oder zum Mischen von Bearbeitungszusätzen, Bohrmitteln und Schneidemitteln.
